# EUROPÄISCHE PATENTSCHRIFT

(11) **EP 0 843 031 B1**
(45) Veröffentlichungstag und Bekanntmachung des Hinweises auf die Patenterteilung: **12.05.2004**
(21) Anmeldenummer: 97119307.3
(22) Anmeldetag: 05.11.1997
(51) Int. Cl.: D01F 1/10, D01F 6/70, C08K 9/06, C08L 75/04

(54) **Verfahren zum Schutz von Elastan-Fasern**
Method for protecting elastane fibres
Procédé pour la protection de fibres élasthanes

(30) Priorität: 18.11.1996 DE 19647572
(43) Veröffentlichungstag der Anmeldung: 20.05.1998
(73) Patentinhaber: BAYER AG, 51368 Leverkusen (DE)
(72) Erfinder: Hütte, Stephan, Dr., 51065 Köln (DE)

(56) Entgegenhaltungen:
- EP-A- 0 489 395
- EP-A- 0 558 758
- DATABASE WPI Section Ch, Week 9206 Derwent Publications Ltd., London, GB; Class A25, AN 92-046261 XP002055987 & JP 03 292 364 A (ASAHI CHEM IND CO LTD) , 24.Dezember 1991
- DATABASE WPI Section Ch, Week 8436 Derwent Publications Ltd., London, GB; Class A25, AN 84-223080 XP002055988 & JP 59 133 248 A (ASAHI CHEM IND CO LTD) , 31.Juli 1984

## Beschreibung

Die Erfindung betrifft den Schutz von Polyurethanzusammensetzungen und speziell daraus resultierenden elastischen Polyurethanfasern, die gegen die Zerstörung oder den Abbau durch chemische Reinigungsmittel auf Basis von halogenierten oder nicht halogenierten Kohlenwasserstoffen, insbesondere von Tetrachlorethylen (Per), wie sie bei der chemischen Textilreinigung, insbesondere vor der Thermofixierung von über Kettwirk- oder Rundstrickverarbeitung hergestelleten Flächenwaren aus elastischen Elastan-Fasern und Polyamid verwendet werden. Die Erfindung betrifft die Verwendung von beschichteten oder unbeschichteten Hydrotalciten und/oder anderen Metall-Aluminium-Hydroxy-Verbindungen mit einem mittleren Durchmesser der Korngröße von kleiner 10µm als Zusatz zu Polyurethanzusammensetzungen und daraus resultierenden elastischen Polyurethanfasem zum Schutz vor einem Abbau oder einer Zerstörung.

Der im Rahmen der vorliegenden Erfindung verwendete Ausdruck "Faser" umfaßt dabei Stapelfasern und/oder kontinuierliche Filamente, die durch im Prinzip bekannte Spinnprozesse wie z.B. das Trockenspinnverfahren oder das Naßspinnverfahren sowie das Schmelzspinnverfahren hergestellt werden können.

Elastische Polyurethanfasern aus langkettigen synthetischen Polymeren, die zu wenigstens 85 % aus segmentierten Polyurethanen auf Basis von z. B. Polyethern, Polyestern und/oder Polycarbonaten aufgebaut sind, sind gut bekannt. Garne aus solchen Fasern werden zur Herstellung von Flächenwaren, Geweben oder Stoffen verwendet, die ihrerseits unter anderem für Miederwaren, Strümpfe und Sportbekleidung wie Badeanzüge bzw. Badehosen geeignet sind. Vor der Färbung der dafür verwendeten Flächenwaren, Gewebe oder Stoffe muß die Ware nach Verarbeitung mit synthetischen Hartfasern wie Polyamid oder Polyester oder Naturfasern wie Baumwolle über z.B. eine Kettwirk- oder Rundstrickmaschine von Faser-Präparationsölen oder Nadelölen befreit werden. Dazu geeignet ist eine chemische Reinigung mit Kohlenwasserstoffen oder halogenierten Kohlenwasserstoffen wie Tetrachlorethylen (Per). Wenn solche Flächenwaren, Gewebe oder Stoffe der anschließenden Thermofixierung und Färbung ausgesetzt werden, kann es zu Schädigungen der elastischen Polyurethan-Fasern kommen, die bis zu Fadenrissen führen können. Dadurch bedingt verliert die Flächenware, das Gewebe oder der Stoff seine Elastizität. Eventuell kann es sogar zur Bildung von Löchern im Textil kommen. Derart zerstörte Flächenwaren, Gewebe oder Stoffe können bei der dann anschließenden Konfektionierung nicht eingesetzt werden und werden als Ausschuß verworfen.

Auch bei der chemischen Reinigung der fertigen Textilien in chemischen Wäschereien spielt die Beständigkeit gegen die üblicherweise als Reinigungsmittel eingesetzten Kohlenwasserstoffe eine große Rolle.

In praktischer Hinsicht kann kein einziger Fadenriß der elastischen Polyurethan-Faser in elastischen, textilen Flächenwaren, Geweben oder Stoffen toleriert werden. Aus diesem Grund ist eine Verbesserung der Beständigkeit gegenüber einer durch chemische Reinigung mit durch z.B. Chlorkohlenwasserstoffe induzierten Zerstörung notwendig, insbesondere für Garne mit einer niedrigen Denier-Zahl (beispielsweise weniger als 300 Denier).

Eine Lösung des Problems der Vermeidung von Zerstörung in elastischen Fasern durch eine chemische Reinigung mit z. B. Tetrachlorethylen ist bislang nicht beschrieben worden.

Der Erfindung liegt die Aufgabe zugrunde, ein Schutzverfahren für Polyurethane oder Polyurethan-Fasern zur Verfügung zu stellen, bei dem die Polyurethane, insbesondere die Polyurethan-Fasern oder Flächenwaren, Gewebe oder Stoffe, die solche Polyurethan-Fasern enthalten, auf einfache Weise gegen eine Zerstörung oder einen Abbau durch chemische Reinigungsmittel, insbesondere durch Tetrachlorethylen stabilisiert werden.

Die Aufgabe wird erfindungsmäßig dadurch gelöst, daß der Polyurethanzusammensetzung eine wirksame Menge fein zerteilter, gegebenenfalls mit anionischen Tensiden, Fettsäuren, Fettsäuresalzen, Silanen, Polyorganosiloxanen, Polyorganohydrogensiloxanen oder mit anderen Schlichtemitteln beschichtete oder unbeschichtete Hydrotalcite oder andere Metall-Aluminium-Hydroxy-Verbindungen mit einem mittleren Durchmesser (Zahlenmittel) der Korngröße von 10µm dem Polyurethan zugesetzt werden.

Gegenstand der Erfindung ist die Verwendung von fein zerteiltem Hydrotalcit und/oder anderen basischen Metall-Aluminium-Hydroxy-Verbindungen, mit einem mittleren Durchmesser (Zahlenmittel) der Korngröße von kleiner 10 µm der allgemeinen Formel (1)

M₁₋ₓ²⁺Alₓ(OH)₂A_{x/n}ⁿ⁻. mH₂O (1),

wobei
- M²⁺: für Magnesium oder Zink, insbesondere Magnesium steht,
- Aⁿ⁻: ein Anion mit der Valenzzahl aus der Reihe OH⁻, F⁻, Cl⁻, Br⁻, CO₃²⁻, SO₄²⁻, HPO₄²⁻, Silikat, Acetat oder Oxalat, insbesondere CO₃²⁻ ist,
0 < x ≤ 0,5, und 0 ≤ m < 1 ist,
oder der Formel (2)

MgₛAlₜ(OH)ᵤ(A²⁻)ᵥ.wH₂O (2),

wobei
- s: eine Zahl von 1 bis 15,
- t: eine Zahl von 1 bis 8,
- u: eine Zahl von 1 bis 40,
- w: eine Zahl von 0 bis 20 und
- v: eine Zahl von 1 bis 5 ist und
- A²⁻: ein Anion aus der Reihe CO₃²⁻, SO₄²⁻, HPO₄²⁻, Silikat oder Oxalat, insbesondere CO₃²⁻ ist,
als Zusatz zu Polyurethan in einer Menge von 0,05 bis 30 Gew.-%, insbesondere 0,05 bis 15 Gew.-%, besonders bevorzugt von 0,1 bis 5 Gew.-%, ganz besonders bevorzugt von 0,3 bis 4 Gew.-%, bezogen auf das Polymere, zur Herstellung von Elastanfasern mit erhöhter Beständigkeit gegen halogenierte, teilhalogenierte oder nicht halogenierte Kohlenwasserstoffe, insbesondere gegen C₁- bis C₈-Kohlenwasserstoffe, bevorzugt gegen Tetrachlorethylen, Tetrachlorkohlenstoff oder Trichlorethylen.

Die Hydrotalcite oder anderen Metall-Aluminium-Hydroxy-Verbindungen sind bevorzugt unbeschichtet oder insbesondere mit 0,1 bis 30 Gew.-%, insbesondere mit 0,5 bis 25 Gew.-%, anionischen Tensiden, Fettsäuren, Fettsäuresalzen, Silanen, Polyorganosiloxanen, Polyorganohydrogensiloxanen oder mit anderen Schlichtemitteln beschichtet.

Metall-Aluminium-Hydroxy-Verbindungen im Sinne der Erfindung sind Mischsalze auf Basis eines zweiwertigen Metallions, insbesondere von Mg oder Zn, besonders bevorzugt von Mg, und Aluminium als dreiwertigem Kation, dem Hydroxyanion und einem weiteren ein- oder zweiwertigen Anion, insbesondere OH⁻, F⁻, Cl⁻, Br⁻, CO₃²⁻, SO₄²⁻, HPO₄²⁻, Silikat, Acetat oder Oxalat.

Bei den Hydrotalciten oder Metall-Aluminium-Hydroxy-Verbindungen handelt es sich insbesondere bevorzugt um solche, wie sie z. B. in den Formeln (3) und (4) gezeigt sind:

Mg₅Al₃(OH)₁₅(A²⁻)₂^{·}wH₂O (3),

Mg₆Al₂(OH)₁₂(A²⁻)₃^{·}wH₂O (4),

wobei A²⁻ und w die oben zu Formel 2 angegebene Bedeutung haben.

Bevorzugte Beispiele der Hydrotalcite oder Magnesium-Aluminium-Hydroxy-Verbindungen sind solche mit den Formeln (5), (6) und (7):

Mg₆Al₂(OH)₁₆CO₃^{·}5H₂O (5),

Mg₄Al₂(OH)₁₂CO₃^{·}4H₂O (6),

Mg₆Al₂(OH)₁₂(CO₃)₃^{·}7H₂O (7).

Beispiele für anionische Tenside sind Metallseifen höherer Fettsäuren der Formel RCOOM, in der R eine Alkylgruppe mit 3 bis 40 Kohlenstoffatomen und M ein Metall ist, insbesondere ein Alkali- oder Erdalkalimetall, z.B. Ca oder Mg,
Alkylsulfate der Formel ROSO₃M, in der R und M wie oben definiert sind oder
Alkylsulfonate der Formel RSO₃M, in der R und M ebenfalls wie oben definiert sind.

Spezielle Beispiele sind Natriumstearat, Magnesiumstearat, Natriumoleat, Natriumoctadecylsulfat, Natriumlaurylsulfonat, Aluminiumstearat und Zinkstearat.

Beispiele für Fettsäuren sind Mono- oder Dicarbonsäuren mit geraden oder verzweigten Kohlenwasserstoffketten mit 3 bis 40 Kohlenstoffatomen.
Spezielle Beispiele sind Caprinsäure, Laurinsäure, Palmitinsäure und Stearinsäure.

Beispiele für Silane sind Verbindungen der Formel (R'O)₃SiR", in der R' und R" gleich oder verschieden und eine gerade oder verzweigte Kohlenwasserstoffkette mit 1 bis 40 Kohlenwasserstoffatomen sein kann.

Beispiele für Polyorganosiloxane sind Verbindungen der Formel (8)

(R⁴)₃SiO-(-SiR¹R³O-)ₓ-(-SiR²R⁶O-)_{y}-Si(R⁵)₃ (8),

wobei
x = 0 - 500 und y = 0 - 300,
- R¹, R², R³, R⁴ und R⁵: unabhängig voneinander für einen gesättigten und/oder ungesättigten, gegebenenfalls auch verzweigten Alkylrest mit 1 bis 4 C-Atomen und/oder für einen Arylrest mit 6 bis 9 C-Atomen stehen, der gegebenenfalls auch alkylsubstituiert sein kann und
- R⁶: für einen Alkrylrest mit 6 bis 18 C-Atomen steht.

Spezielle Beispiele sind Polydimethylsiloxane mit einer Viskosität von 3 bis 1000 mPas (gemessen bei 25°C).

Beispiele für Polyorganohydrogensiloxane sind Verbindungen der Formel (9) oder (10):

(R⁴)₃SiO-(-SiR¹R³O-)ₓ-(-SiR²R⁶O-)_{y}-(-SiR⁷HO-)₂-Si(R⁵)₃ (9),

(R²)₃SiO-(-SiR¹HO-)_{z}-Si(R³)₃) (10),

wobei
- x, y, R¹, R², R³, R⁴ und R⁵: die gleiche Bedeutung haben wie in Formel (8),
- R⁷: wie der Rest R¹ definiert ist und
- z: eine Zahl zwischen 1 und 200 beträgt.

Spezielle Beispiele sind Baysilone-Öl MH 15 (Fa. Bayer) oder Baysilone-Öl AC 3303 (Fa. Bayer).

Bevorzugt sind solche Hydrotalcite und/oder Metall-Aluminium-Hydroxy-Verbindungen, die unbeschichtet sind.

Besonders bevorzugt sind solche Hydrotalcite und/oder Metall-Aluminium-Hydroxy-Verbindungen, die mit 0,05 bis 25 Gew.-% anionischen Tensiden, Fettsäuren, Fettsäuresalzen, Silanen, Polyorganosiloxanen, Polyorganohydrogensiloxanen und/oder anderen Beschichtungsmitteln bezogen auf die Menge an Hydrotalcit und/oder Metall-Aluminium-Hydroxy-Verbindung, beschichtet sind. Insbesondere werden Hydrotalcite und/oder Metall-Aluminium-Hydroxy-Verbindungen eingesetzt, die mit 0,5 bis 10 Gew.-% anionischen Tensiden, Fettsäuren, Fettsäuresalzen, Silanen, Polyorganosiloxanen, Polyorganohydrogensiloxanen und/oder anderen Beschichtungsmitteln beschichtet sind.

Die Beschichtung der Hydrotalcite oder Metall-Aluminium-Hydroxy-Verbindungen kann durch Aufsprühen und/oder Untermischen der anionischen Tenside, Fettsäuren, Fettsäuresalze, Silane, Polyorganosiloxane, Polyorganohydrogensiloxane und/oder anderer Beschichtungsmittel gemeinsam oder getrennt in beliebiger Reihenfolge vorzugsweise vor und/oder während einer abschließenden Mahlung der Hydrotalcite oder Metall-Aluminium-Hydroxy-Verbindungen zu ihrer Herstellung oder zur Einstellung bevorzugter Korngrößen erfolgen.

Es ist dabei gleichgültig, ob die anionischen Tenside, Fettsäuren, Fettsäuresalze, Silane, Polyorganosiloxane, Polyorganohydrogensiloxane und/oder anderen Beschichtungsmittel bei der Herstellung der Hydrotalcite oder Metall-Aluminium-Hydroxy-Verbindungen den anfallenden feuchten Filterkuchen, Pasten oder Aufschlämmungen vor der Trocknung zugemischt werden, oder ob es dem trockenen Gut unmittelbar vor der abschließenden Mahlung in geeigneter Weise, beispielsweise durch Aufsprühen beigegeben oder, im Falle einer Dampfstrahltrocknung, dem Dampf unmittelbar bei der Einspeisung in die Strahlmühle zugesetzt werden. Die anionischen Tenside, Fettsäuren, Fettsäuresalze, Silane, Polyorganosiloxane, Polyorganohydrogensiloxane und/oder anderen Beschichtungsmittel können gegebenenfalls vor der Zugabe in eine Emulsion überführt werden.

Die Herstellung der Hydrotalcite oder der Metall-Aluminium-Hydroxy-Verbindungen erfolgt beispielsweise nach grundsätzlich bekannten Verfahren. Solche Verfahren sind z.B. beschrieben in der Offenlegungsschrift EP 129 805-A1 oder in der Schrift EP 117 289-A1.

Bevorzugt erfolgt die Herstellung der Hydrotalcite und/oder Metall-Aluminium-Hydroxy-Verbindungen aus ihren Ausgangsverbindungen z.B. aus MgCO₃, Al₂O₃ und Wasser in Anwesenheit eines Lösungsmittels wie z.B. Wasser, Alkohol (z.B. C₁-C₈-Alkoholen) oder chlorierten Kohlenwasserstoffen mit anschließender Trocknung durch z.B. Sprühtrocknung und Mahlung durch z.B. eine Perlmühle.

Besonders bevorzugt erfolgt die Beschichtung der Hydrotalcite oder Metall-Aluminium-Hydroxy-Verbindungen durch Mahlung mit z.B. einer Perlmühle in Anwesenheit von Lösungsmitteln wie z.B. Dimethylacetamid, Dimethylformamid oder Dimethylsulfoxid, wie sie auch bei der Herstellung des Polyurethans eingesetzt werden können. Das zur Beschichtung eingesetzte anionische Tensid, die Fettsäuren, Silane, Polyorganosiloxane, Polyorganohydrogensiloxane und/oder andere Beschichtungsmittel können dabei dem Mahlgut in geeigneter Weise zugesetzt werden oder, wie bereits ober beschrieben, dem Hydrotalcit oder der Metall-Aluminium-Hydroxy-Verbindung vor oder bei der Trocknung zugesetzt werden. Bei der Mahlung werden insbesondere mittlere Korngrößen der beschichteten oder unbeschichteten Hydrotalcite oder Metall-Aluminium-Verbindungen mit einem mittleren Durchmesser (Zahlenmittel) von 10 µm erreicht, bevorzugt kleiner als 5 µm und besonders bevorzugt kleiner als 2 µm. Diese Korngrößen werden durch Verarbeitung der Hydrotalcite und/oder Metall-Aluminium-Hydroxy-Verbindungen durch die bereits oben genannten Verfahren erreicht.

Die Hydrotalcite oder Metall-Aluminium-Hydroxy-Verbindungen können an beliebiger Stelle bei der Herstellung von Polyurethan-Fasern dem Polyurethan zugesetzt werden. Beispielsweise können die Hydrotalcite oder Metall-Aluminium-Hydroxy-Verbindungen in Form einer Lösung oder Aufschlämmung zu einer Lösung oder Dispersion von anderen Faser-Zusätzen hinzugefügt, und dann in Bezug auf die Faserspinndüsen stromaufwärts mit der Polymerlösung vermischt oder in diese eingespritzt werden. Natürlich können die Hydrotalcite und/oder Metall-Aluminium-Hydroxy-Verbindungen auch getrennt zu der Polymerspinnlösung als trockene Pulver oder als Aufschlämmung in einem geeigneten Medium hinzugefügt werden. Die Hydrotalcite und/oder Metall-Aluminium-Hydroxy-Verbindungen können weiterhin in den oben genannten Formulierungen bei der Polymerherstellung zugesetzt werden.

Die erfindungsgemäßen Polyurethane oder Polyurethan-Fasern können eine Vielzahl von verschiedenen Zusätzen für verschiedene Zwecke enthalten, wie beispielsweise Mattierungsmittel, Füllstoffe, Antioxidantien, Farbstoffe, Anfärbemittel, Stabilisatoren gegen Wärme, Licht und UV-Strahlung usw., wobei diese Zusätze so dosiert werden, daß sie keine den Hydrotalciten und/oder Metall-Aluminium-Hydroxy-Verbindungen entgegengesetzte Wirkungen zeigen.

Wenn die aus den erfindungsgemäßen Fasern hergestellten Flächenwaren, Garne oder Stoffe appretiert oder gefärbt werden, ist insbesondere darauf zu achten, daß eine Deaktivierung oder Auslösung der Hydrotalcite und/oder Metall-Aluminium-Hydroxy-Verbindungen vermieden wird.

Nicht beschichtete Hydrotalcite und/oder Metall-Aluminium-Hydroxy-Verbindungen können unter Umständen in polaren Lösungsmitteln wie z.B. Dimethylacetamid, Dimethylformamid oder Dimethylsulfoxid, die im Trocken- oder Naßspinnprozeß zur Herstellung von Fasern aus Polyurethanen üblicherweise eingesetzt werden, agglomerieren. Aus diesem Grund können bei Spinnlösungen mit eingearbeiteten unbeschichteten Hydrotalciten und/oder Metall-Aluminium-Hydroxy-Verbindungen Störungen während des Spinnprozesses auftreten, die bei langer Spinndauer bis zu abreißenden Fasern führen können. Bei Einarbeitung der mit anionischen Tensiden, Fettsäuren, Silanen, Polyorganosiloxanen, Polyorganohydrogensiloxanen und/oder andere Beschichtungsmitteln beschichteten Hydrotalcite und/oder Metall-Aluminium-Hydroxy-Verbindungen in Polyurethanlösungen tritt keine Agglomeration in der Spinnlösung oder in lösungsmittelfreien Polymerschmelzen auf und die mittlere Korngröße der beschichteten Hydrotalcite und/oder Metall-Aluminium-Hydroxy-Verbindungen bleibt unverändert. Aus diesem Grund sind die mit anionischen Tensiden, Fettsäuren, Silanen, Polyorganosiloxanen, Polyorganohydrogensiloxanen und/oder andere Beschichtungsmitteln beschichteten Hydrotalcite und/oder Metall-Aluminium-Hydroxy-Verbindungen den unbeschichteten bei den genannten Spinnverfahren vorzuziehen.

Werden bei dem Verfahren zum Schutz von Polyurethan-Fasern weniger als 0,05 Gew.-% der Hydrotalcite und/oder Metall-Aluminium-Hydroxy-Verbindungen innerhalb des Filamentes oder auf der Filamentoberfläche verteilt, ist die Wirksamkeit gegen den Abbau oder die Zerstörung des Polymeren durch chemische Reinigung mit Tetrachlorethylen unter Umständen nicht zufriedenstellend. Die Dispergierung von mehr als 15 Gew.-% der Hydrotalcite und/oder Metall-Aluminium-Hydroxy-Verbindungen innerhalb des Filamentes oder auf der Filamentoberfläche kann zu nachteiligen physikalischen Eigenschaften der Faser führen und ist daher nicht empfehlenswert.

Die erfindungsgemäß zu schützenden Polyurethan-Fasern bestehen insbesondere aus segmentierten Polyurethanpolymeren, wie beispielsweise solchen, die auf Polyethern, Polyestern, Polyetherestem oder Polycarbonaten basieren. Derartige Fasern können nach grundsätzlich bekannten Verfahren hergestellt werden, wie beispielsweise nach diejenigen, die in den Schriften US 2 929 804, US 3 097 192, US 3 428 711, US 3 553 290, US 3 555 115 oder in der Schrift WO 9 309 174 beschrieben werden. Ferner können die Polyurethan-Fasern aus thermoplastischen Polyurethanen, deren Herstellung beispielsweise in der Schrift DE 4 414 327 A1 beschrieben ist, bestehen. Einige von diesen Polymeren sind gegenüber einem durch chemische Reinigung mit Tetrachlorethylen induzierten Abbau empfindlicher als andere. Besonders empfindlich sind Polyurethan-Fasern aus einem auf Polyether basierenden Polyurethan Aus diesem Grunde wird das Verfahren bevorzugt auf auf Polyether basierende Polyurethanfasem angewendet.

Bei den Hydrotalciten und/oder Metall-Aluminium-Hydroxy-Verbindungen handelt es sich bevorzugt um Additive, die kein Schwermetall enthalten und aus toxikologischer Sicht unbedenklich sind und daher bevorzugt werden. Dadurch kann gewährleistet werden, daß bei der Weiterverarbeitung der Elastan-Fasern wie z.B. der Färbung keine Abwasser entstehen, die die Funktionsweise einer biologisch arbeitenden Kläranlage mindern oder zerstören.

Durch die Einarbeitung der Hydrotalcite und/oder Metall-Aluminium-Hydroxy-Verbindungen wird weiterhin, wie in Beispiel 1 gezeigt, erreicht, daß die thermischen Eigenschaften der Polyurethan-Faser, beispielsweise die Heißreißzeit der erhaltenen Elastan-Fasern, nicht verändert werden, auch nachdem eine in der Textilindustrie übliche chemische Reinigung mit Tetrachlorethylen (Per-Wäsche) oder anderen typischerweise eingesetzten halogenierten Kohlenwasserstoffen wie Tetrachlorkohlenstoff, Trichlorethylen oder Fluorchlorkohlenwasserstoffen durchgeführt wurde. Die Stabilisierung der Heißreißzeit durch in die Elastan-Faser eingearbeitete Hydrotalcite und/oder Metall-Aluminium-Hydroxy-Verbindungen ist unabhängig von einer Beschichtung und von der Art der Beschichtung der Hydrotalcite und/oder Metall-Aluminium-Hydroxy-Verbindungen. Durch die stabilisierte Heißreißzeit wird es möglich, eine chemische Reinigung mit z.B. Tetrachlorethylen durchzuführen (Per-Wäsche), ohne daß Flächenwaren, Gewebe oder Stoffe, bestehend aus Elastan- und Polyamid-Fasern, durch Faserbrüche an der Elastan-Faser zerstört werden.

Die Polyurethane, die als Elastan-Faser-Grundstoff dienen können und zu denen auch segmentierte Polyurethane gehören, werden grundsätzlich insbesondere aus einem linearen Homo- oder Copolymer mit je einer Hydroxygruppe am Ende des Moleküls und einem Molekulargewicht von 600 bis 4000, wie z.B. Polyetherdiole, Polyesterdiole, Polyesteramidodiole, Polycarbonatdiole, Polyacryldiole, Polythioesterdiole, Polythioetherdiole, Polyhydrocarbondiole oder eine Mischung oder Copolymere dieser Gruppe hergestellt. Weiterhin basiert das Polyurethan insbesondere auf organische Diisocyanaten und einem Kettenverlängerer mit mehreren aktiven Wasserstoffatomen, wie z.B. Di- und Polyolen, Di- und Polyaminen, Hydroxylaminen, Hydrazinen, Polyhydraziden, Polysemicarbaziden, Wasser, oder einer Mischung aus diesen Komponenten.

Die Hydrotalcite oder Metall-Aluminium-Hydroxy-Verbindungen können zusammen oder getrennt mit anderen häufig eingesetzten Komponenten wie z. B. UV-Stabilisatoren, Antioxidantien, Schadgasstabilisatoren, Anfärbezusätzen, Antistatika, Gleitmitteln, Farbstoffen, Mattierungsmitteln, Füllstoffen usw. in die Polyurethanzusammensetzungen eingearbeitet werden.

Das nachfolgend beschriebene Testverfahren wird zum Messen der oben diskutierten Parameter verwendet.

Die Veränderung der thermischen Stabilität von Polyurethan-Fasern durch eine chemische Reinigung mit Tetrachlorethylen wird durch Messung der Heißreißzeit vor und nach einer chemischen Reinigung mit Tetrachlorethylen überprüft. Die Bestimmung der Heißreißzeit erfolgt, indem eine zu 100 % verdehnte Polyurethan-Faser mit einer Metallplatte (Temperatur: 200°C, Größe: 4 x 4 cm) in Kontakt gebracht wird. Es wird die Zeit gemessen, die vergeht, bis die Polyurethan-Faser reißt. Die chemische Reinigung der Polyurethan-Faser mit Tetrachlorethylen erfolgt, indem die Polyurethan-Faser bei 25°C eine bestimmte Zeit (hier: 2 min) in ein Bad mit Tetrachlorethylen gelegt (Flottenverhältnis Polyurethan/Tetrachlorethylen = 1/30 Gew.-%) und anschließend bei 25°C über 12 Stunden getrocknet wird.

Die Erfindung wird nachfolgend durch ein Beispiel, das jedoch keine Beschränkung darstellt, weiter erläutert, wobei alle Prozentangaben sich auf das Gesamtgewicht der Polyurethan-Faser beziehen.

### Beispiel:

In dem Beispiel 1 wurden die Polyurethan-Fasern aus einem Polyetherdiol, bestehend aus Polytetrahydrofuran (PTHF) mit einem durchschnittlichen Molekulargewicht von 2000 hergestellt. Das Diol wurde mit Methylen-bis(4-phenyldiisocyanat) (MDI) mit einem molaren Verhältnis von 1 zu 1,7 gekappt und dann mit einem Gemisch aus Ethylendiamin (EDA) und Diethylamin (DEA) in Dimethylacetamid kettenverlängert.

Danach wurde den Polymeren ein Stammansatz von Additiven beigemischt. Dieser Stammansatz bestand aus 62,6 Gew.-% Dimethylacetamid (DMAC), 10,3 Gew.-% Cyanox 1790 (Fa. American Cyanamid; Stabilisator), 27,0 Gew.-% 30%iger Spinnlösung und 0,001 Gew.-% des Farbstoffs Makrolexviolett (Fa. Bayer AG). Dieser Stammansatz wurde der Spinnlösung so zugefügt, daß in der fertigen Polyurethan-Faser der Gehalt an Cyanox 1790 1 Gew.-%, bezogen auf den Feststoff des Faserpolymeren, betrug.

Dieser Spinnlösung wurde ein zweiter Stammansatz zugemischt, bestehend aus 30,9 Gew.-% Titandioxid Typ RKB 2 (Fa. Bayer AG), 44,5 Gew.-% DMAC und 24,6 Gew.-% 22 %iger Spinnlösung, in der Art, daß in der fertigen Faser ein Titandioxidgehalt von 0,05 Gew.-% bezogen auf das Polyurethan-Harnstoff-Polymere, resultierte.

Dieser Spinnlösung wurde ein dritter Stammansatz zugemischt, bestehend aus 13,8 Gew.-% der in Tabelle 1 angegebenen Hydrotalcite und/oder Metall-Aluminium-Hydroxy-Verbindungen, 55,2 Gew.-% Dimethylacetamid und 31,0 Gew.-% 30%ige Spinnlösung, in der Art, daß in der fertigen Polyurethan-Faser der in Tabelle 1 angegebene Gehalt an Hydrotalciten und/oder Metall-Aluminium-Hydroxy-Verbindungen, bezogen auf das Polyurethan-Harnstoff-Polymere, resultierte.

Dieser Spinnlösung wurde nun ein weiterer Stammansatz zugemischt. Er bestand aus 5,4 Gew.-% Magnesium-Stearat, 45,0 Gew.-% DMAC und 49,6 Gew.-% 30%iger Spinnlösung und wurde so zugesetzt, daß ein Magnesium-Stearat-Gehalt von 0,20 Gew.-%, bezogen auf den Feststoff der Faserpolymeren, resultierte

Die fertige Spinnlösung wurde durch Spinndüsen in einer typischen Spinnapparatur zu Filamenten mit einem Titer von 10 dtex trocken versponnen, wobei jeweils vier Einzelfilamente zu koaleszierenden Filamentgarnen zusammengefaßt wurden. Die Faserpräparation, bestehend aus Polydimethylsiloxan mit einer Viskosität von 10 mPas/25°C, wurde über eine Präparationswalze aufgetragen, wobei ca. 4 Gew.-%, bezogen auf das Gewicht der Polyurethan-Faser, appliziert wurden. Die Polyurethan-Faser wurde anschließend mit einer Geschwindigkeit von 900 m/min aufgewickelt.

**Tabelle 1**

| Probe | Stabilisator | Zugesetzte Menge Stabilisator (%) | Besctuchtung des Stabilisators (Gew-%) in Bezug auf Stabilisator | HRZ (Nullwerts) | HRZ (Behandlung mit Per über 2 min's) |
|---|---|---|---|---|---|
| 1-1 | - | - | - | 22,1 | 7 |
| 1-2 | Zinkoxid | 3 | - | 20 | 10 |
| 1-3 | Mg₆Al₂(OH)₁₆CO₃ x 5H₂O | 3 | 2% Stearinsäure | 31 | 37 |
| 1-4 | Mg₆Al₂(OH)₁₆CO₃ x 5H₂O | 0,5 | 5% Baysilone-Öl MH 15 | 22 | 14 |
| 1-5 | Mg₆Al₂(OH)₁₆CO₃ x 5H₂O | 1,5 | 5% Baysilone-Öl MH 15 | 24 | 24 |
| 1-6 | Mg₆Al₂(OH)₁₆CO₃ x 5H₂O | 3 | 5% Baysilone-Öl MH 15 | 26 | 24 |
| 1-7 | Mg₆Al₂(OH)₁₆CO₃ x 5H₂O | 3 | 5% Baysilone-Öl AC 3303 | 27 | 31 |
| 1-8 | Mg₆Al₂(OH)₁₆(CO₃)₃ x 5H₂O | 3 | - | 28 | 26 |
| 1-9 | Mg₆Al₂(OH)₁₆(CO₃)₃ x 5H₂O | 3 | 5% Polydimethylsiloxan | 37 | 30 |

Aus den in Tabelle 1 angegebenen Beispielen geht hervor, daß durch Zugabe von beschichteten oder unbeschichteten Hydrotalciten Magnesium-Aluminium-Hydroxy-Carbonaten die thermischen Eigenschaften der Polyurethan-Faser in z.B. Form der die Heißreizzeit durch eine chemische Reinigung mit z.B. Tetrachlorethylen konstant bleibt und keine Schädigung eintritt.

## Patentansprüche

1. Verwendung von fein zerteiltem Hydrotalcit und/oder anderen basischen Metall-Aluminium-Hydroxy-Verbindungen, mit einem mittleren Durchmesser (Zahlenmittel) der Komgröße von kleiner 10µm der allgemeinen Formel (1)
M₁₋ₓ²⁺Alₓ(OH)₂A_{x/n}ⁿ⁻.mH₂O (1),
wobei
M²⁺ für Magnesium oder Zink, insbesondere Magnesium steht,
Aⁿ⁻ ein Anion mit der Valenzzahl aus der Reihe OH⁻, F⁻, Cl⁻, Br, CO₃²⁻, SO₄²⁻, HPO₄²⁻, Silikat, Acetat oder Oxalat, insbesondere CO₃²⁻ ist,
0 < x ≤ 0,5, und 0 ≤ m < 1 ist,
oder der Formel (2)
MgₛAlₜ(OH)ᵤ(A²⁻)ᵥ.wH₂O (2),
wobei
s eine Zahl von 1 bis 15,
t eine Zahl von 1 bis 8,
u eine Zahl von 1 bis 40,
w eine Zahl von 0 bis 20 und
v eine Zahl von 1 bis 5 ist und
A²⁻ ein Anion aus der Reihe CO₃²⁻, SO₄²⁻, HPO₄²⁻, Silikat oder Oxalat, insbesondere CO₃²⁻ ist,
als Zusatz zu Polyurethan in einer Menge von 0,05 bis 30 Gew.-%, insbesondere 0,05 bis 15 Gew.-%, besonders bevorzugt von 0,1 bis 5 Gew.-%, ganz besonders bevorzugt von 0,3 bis 4 Gew.-%, bezogen auf das Polymere, zur Herstellung von Elastanfasern mit erhöhter Beständigkeit gegen halogenierte, teilhalogenierte oder nicht halogenierte Kohlenwasserstoffe.

2. Verwendung nach Anspruch 1, **dadurch gekennzeichnet, daß** die Polyurethanfasermassen gegen chlorierte, fluorierte oder gemischt chloriert und fluorierte C₁- bis C₈-Kohtenwasserstoffe, insbesondere gegen Tetrachlorkohlenstoff, Trichlorethylen oder Tetrachlorethylen, beständig gemacht werden.

3. Verwendung nach Anspruch 1 bis 2, **dadurch gekennzeichnet, daß** das Hydrotalcit oder die Metall-Aluminium-Hydroxy-Verbindung unbeschichtet oder mit anionischen Tensiden, mit Fettsäuren, Fettsäuresalzen, Silanen, Polyorganosiloxanen, Polyorganohydrogensiloxan oder höheren Fettsäureestern beschichtet ist.

4. Verwendung nach Anspruch 3, **dadurch gekennzeichnet, daß** die Beschichtung in einer Menge von 0,05 bis 25. Gew.-%, bevorzugt von 0,5 bis 10 Gew.-%, bezogen auf das Hydrotalcit oder die Metall-Aluminium-Hydroxy-Verbindung, erfolgt.

5. Verwendung nach den Ansprüchen 1 bis 4, **dadurch gekennzeichnet, daß** als Hydrotalcite oder Metall-Aluminium-Hydroxy-Verbindungen solche der Formeln (3) oder (4)
Mg₅Al₃(OH)₁₅(A²⁻)₂^{·}wH₂O (3),
Mg₆Al₂(OH)₁₂(A²⁻)₃^{·}wH₂O (4),
indem A²⁻ und w die Bedeutung der in Formel (2) angegebenen gleichnamigen Rest haben.

6. Verwendung nach den Ansprüchen 1 bis 5, **dadurch gekennzeichnet, daß** als Polyurethanzusatz die Verbindungen der Formeln (5), (6) oder (7)
Mg₆Al₂(OH)₁₆CO₃^{·}5H₂O (5),
Mg₄Al₂(OH)₁₂CO₃^{·}4H₂O (6),
Mg₆Al₂(OH)₁₂(CO₃)₃^{·}7H₂O (7),
eingesetzt werden.

## Claims

1. Use of finely divided hydrotalcite and/or other basic metal aluminium hydroxy compounds, with an average grain size diameter (number average) of less than 10µm of the general formula (1)
M₁₋ₓ²⁺Alₓ(OH)₂A_{x/n}ⁿ⁻·mH₂O (1),
wherein
M²⁺ denotes magnesium or zinc, in particular magnesium,
Aⁿ⁻ is an anion of that valency number from the range comprising OH⁻, F⁻, Cl⁻, Br⁻, CO₃²⁻, SO₄²⁻, HPO₄²⁻, silicate, acetate or oxalate, in particular CO₃²⁻,
0 < x ≤ 0.5 and 0 ≤ m < 1 apply,
or of the formula (2)
MgₛAlₜ(OH)ᵤ(A²⁻)ᵥ·wH₂O (2),
wherein
s is a number from 1 to 15,
t is a number from 1 to 8,
u is a number from 1 to 40,
w is a number from 0 to 20 and
v is a number from 1 to 5 and
A²⁻ is an anion from the group comprising CO₃²⁻, SO₄²⁻, HPO₄²⁻, silicate or oxalate, in particular CO₃²⁻,
as an additive to polyurethane in a quantity of 0.05 to 30 wt.%, in particular from 0.05 to 15 wt.%, particularly preferably from 0.1 to 5 wt.%, very particularly preferably from 0.3 to 4 wt.%, relative to the polymer, for the production of elastane fibres having elevated resistance to halogenated, partially halogenated or non-halogenated hydrocarbons.

2. Use according to claim 1, **characterised in that** the polyurethane fibre compositions are rendered resistant to chlorinated, fluorinated or mixed chlorinated and fluorinated C₁ to C₈ hydrocarbons, in particular to tetrachloromethane, trichloroethylene or tetrachloroethylene.

3. Use according to claims 1 to 2, **characterised in that** the hydrotalcite or the metal aluminium hydroxy compound is uncoated or coated with anionic surfactants, with fatty acids, fatty acid salts, silanes, polyorganosiloxanes, polyorganohydrogensiloxanes or higher fatty acid esters.

4. Use according to claim 3, **characterised in that** coating is provided in a quantity of 0.05 to 25 wt.%, preferably of 0.5 to 10 wt.%, relative to the hydrotalcite or the metal aluminium hydroxy compound.

5. Use according to claims 1 to 4, **characterised in that** the hydrotalcites or metal aluminium hydroxy compounds used are those of the formulae (3) or (4)
Mg₅Al₃(OH)₁₅(A²⁻)₂·wH₂O (3),
Mg₆Al₂(OH)₁₂(A²⁻)₃·wH₂O (4),
in which A²⁻ and w have the meaning of the residues of the same name stated above in the formula (2).

6. Use according to claims 1 to 5, **characterised in that** the compounds of the formulae (5), (6) or (7) are used as the polyurethane additive
Mg₆Al₂(OH)₁₆CO₃·5H₂O (5),
Mg₄Al₂(OH)₁₂CO₃·4H₂O (6),
Mg₆Al₂(OH)₁₂(CO₃)₃·7H₂O (7).

## Revendications

1. Utilisation de composés d'hydrotalcite et/ou d'autres composés métal-aluminium-hydroxydes basiques finement divisés, avec un diamètre moyen (moyenne en nombre) de grosseur de grains inférieur à 10 µm, de formule générale (1 )
M₁₋ₓ²⁺Alₓ(OH)₂A_{x/n}ⁿ⁻·mH₂O (1),
dans laquelle
M²⁺ est le magnésium ou le zinc, en particulier le magnésium,
Aⁿ⁻ est un anion de ce nombre de valence dans la plage de OH⁻, F⁻, Cl⁻, Br⁻, CO₃²⁻, SO₄²⁻, HPO₄²⁻, silicate, acétate ou oxalate, en particulier CO₃²⁻,
0 < x ≤ 0,5, et 0 ≤ m < 1,
ou de formule (2)
MgₛAlₜ(OH)ᵤ(A²⁻)_{v·}wH₂O (2),
dans laquelle
s est un nombre de 1 à 15,
t est un nombre de 1 à 8,
u est un nombre de 1 à 40,
w est un nombre de 0 à 20 et
v est un nombre de 1 à 5 et
A²⁻ est un anion de la série de CO₃²⁻, SO₄²⁻, HPO₄²⁻, silicate, acétate ou oxalate, en particulier CO₃²⁻,
comme additif à du polyuréthane en une quantité de 0,05 à 30 % en poids, en particulier 0,05 à 15 % en poids, en particulier de préférence 0,1 à 5 % en poids, tout particulièrement de préférence 0,3 à 4 % en poids, rapporté au polymère, pour la préparation de fibres d'élasthanne avec une résistance améliorée vis-à-vis des hydrocarbures halogénés, partiellement halogénés ou non halogénés.

2. Utilisation selon la revendication 1, **caractérisée en ce que** les masses de fibres de polyuréthane sont rendues résistantes aux hydrocarbures en C₁ à C₈ chlorés, fluorés ou en mélange chlorés et fluorés, en particulier contre au tétrachlorure de carbone, au trichloréthylène et au térachloréthylène.

3. Utilisation selon la revendication 1 à 2, **caractérisée en ce que** l'hydrotalcite ou le composé métal-aluminium-hydroxyde n'est pas revêtu ou est revêtu de tensioactifs anioniques, d'acides gras, de sels d'acides gras, de silanes, de polyorganosiloxanes, de polyorganohydrogénosiloxanes ou d'esters d'acides gras supérieurs.

4. Utilisation selon la revendication 3, **caractérisée en ce que** le revêtement est effectué en une quantité de 0,05 à 25 % en poids, de préférence 0,5 à 10 % en poids, rapporté à l'hydrotalcite ou au composé de métal-aluminium-hydroxyde.

5. Utilisation selon les revendications 1 à 4, **caractérisée en ce qu'**on utilise comme hydrotalcite ou composés de métal-aluminium-hydroxydes ceux de formule (3) ou (4)
Mg₅Al₃(OH)₁₅(A²⁻)_{2·}wH₂O (3),
Mg₆Al₂(OH)₁₂(A²⁻)_{3·}wH₂O (4),
où A²⁻ et w ont la signification que les radicaux ont dans la formule (2).

6. Utilisation selon les revendications 1 à 5, **caractérisée en ce qu'**on utilise comme additif de polyuréthane les composés de formules (5), (6) ou (7)
Mg₆Al₂(OH)₁₆CO₃·5H₂O (5),
Mg₄Al₂(OH)₁₂CO₃·4H₂O (6),
Mg₆Al₂(OH)₁₂(CO₃)₃·7H₂O (7).
